# EUROPÄISCHE PATENTSCHRIFT

(11) **EP 0 437 655 B1**
(45) Veröffentlichungstag und Bekanntmachung des Hinweises auf die Patenterteilung: **04.05.1994**
(21) Anmeldenummer: 90100914.2
(22) Anmeldetag: 17.01.1990
(51) Int. Cl.: B62D 21/02

(54) **Leiterrahmen**
Ladder frame
Châssis en échelle

(43) Veröffentlichungstag der Anmeldung: 24.07.1991
(73) Patentinhaber: Kögel Fahrzeugwerke Aktiengesellschaft, D-89016 Ulm (DE); LUCCIOLA-Kögel s.r.l., I-35 010 Carmignano di Brenta (PD) (IT)
(72) Erfinder: Manfio, Lucio, I-35010 Camignano di Brenta (IT)
(74) Vertreter: Kohlmann, Karl Friedrich, Dipl.-Ing.

(56) Entgegenhaltungen:
- DE-A- 595 854
- US-A- 2 113 403
- US-A- 2 700 551
- US-A- 3 534 977
- US-A- 4 534 589

## Beschreibung

Die vorliegende Erfindung betrifft einen Leiterrahmen zur Abstützung und Befestigung von Bodenbelagsprofilen von Aufbauten oder Plattformen von Lastkraftwagen oder Anhängern
- mit einem oder mehreren Längsträgern
- einer Anzahl von Querträgern, die quer zu den Längsträgern verlaufen und mit diesen verbunden sind,
- mit allseitig geschlossenen Durchbrechungen in den Längsträgern, durch die sich die Querträger hindurcherstrecken,
- mit Auflageflächen auf der Oberseite der Längsträger, auf denen die Bodenbelagsprofile aufruhen
- sowie mit Auflageflächen auf der Oberseite der Querträger.

Derartige Leiterrahmen, häufig auch als Hilfsrahmen bezeichnet, werden jeweils am Fahrgestellrahmen eines Lastkraftwagens oder eines Anhängers befestigt und dienen dazu, die aufgrund der Beladung in die Bodenbelagsprofile eingeleiteten Kräfte auf das Fahrgestell zu übertragen.

Als Bodenbelagsprofile werden üblicherweise Platten aus Holzwerkstoffen, Holzbretter, Metallprofile oder auch Blechplatten eingesetzt, die mit ihrer Oberseite jeweils die sogenannte Ladefläche bilden und die sich mit ihrer Unterseite auf dem Leiterrahmen abstützen.

Unter Aufbauten werden sowohl offene als auch geschlossene Aufbauten verstanden, wie beispielsweise Pritschen-, Kipp-, Koffer- und Kühlaufbauten. Unter Plattformen sind reine Ladeflächen zu verstehen, die keine seitlich abschließenden Elemente o.dgl. Aufbauten aufweisen.

Leiterrahmen der gattungsgemäßen Art, d.h. solche, bei denen die Längsträger im Kreuzungsbereich Durchbrechungen aufweisen, durch die sich die Querträger hindurcherstrecken, ergeben eine relativ verwindungsweiche Konstruktion, insbesondere dann, wenn die Querträger an den Längsträgern an den jeweiligen Kreuzungsstellen im Bereich der neutralen Zone miteinander verbunden sind. Verwindungsweiche Leitrrahmenkonstruktionen haben den Vorteil, daß praktisch keine Rißprobleme im Bereich der Verbindungsstellen zwischen den Längs- und den Querträgern auftreten, was insbesondere bei Fahrzeugen mit langen Aufbauten oder Fahrzeugen für den Einsatz im Gelände von Vorteil ist. Von Vorteil ist ferner, daß aufgrund der Durchbrechungen in den Längsträgern die Lage der Querträger gegenüber den Längsträgern exakt vorgegeben ist, so daß bei der Montage der Querträger an den Längsträgern nur relativ einfache Vorrichtungen verwendet werden können.

Leiterrahmen der gattungsgemäßen Art haben allerdings den Nachteil, daß die Auflageflächen der Querträger stets höhenversetzt unterhalb der Auflageflächen der Längsträger liegen. Um diese Höhendifferenz auszugleichen, müssen daher auf den Auflageflächen der Querträger Ausgleichskonstruktionen angeordnet werden, wodurch die Konstruktion und die Montage aufwendiger und deshalb teurer werden, wodurch der o.g. Vorteil im Zusammenhang mit der Lage der Querträger gegenüber den Längsträgern wieder weitgehend zunichte gemacht wird.

Werden zur Vereinfachung nicht auf allen Querträgern Ausgleichskonstruktionen angeordnet, so reduziert sich zwangsläufig die spezifische Belastbarkeit der Bodenbelagsprofile, wodurch die Beladungsmöglichkeiten eingeschränkt werden.

Bekannt sind ferner Leiterrahmenkonstruktionen, bei denen die Querträger auf die Oberseite der Längsträger aufgelegt und mittels Aussteifungs- bzw. Knotenblechen mit diesen verbunden werden. Bei derartigen Konstruktionen liegen die Auflageflächen der Querträger in einer gemeinsamen Ebene, so daß sich hinsichtlich der Querträger ein flächenbündiger Aufbau ergibt, der ohne montageaufwendige Ausgleichskonstruktionen auskommt, da die Bodenbelagsprofile unmittelbar auf den Auflageflächen der Querträger aufliegen.

Durch die Verbindung mit Aussteifungs- oder Knotenblechen ergibt sich jedoch eine relativ verwindungs- bzw. torsionssteife Konstruktion, die bei Fahrzeugen für den Geländebetrieb oder bei solchen mit langen Aufbauten zu unerwünschten Rißbildungen führt. Auch können bei derartigen Konstruktionen die zwischen benachbarten Querträgern verlaufenden Abschnitte der Längsträger nicht zur Abstützung der Bodenbelagsprofile herangezogen werden, wodurch die spezifische Belastbarkeit gerade im kritischen Mittelbereich der Ladefläche ungünstig beeinflußt wird. Aufgrund der Anordnung der Querträger auf der Oberseite der Längsträger sind derartige Leiterrahmen zudem vergleichsweise hoch, was sich ebenfalls ungünstig auf die Ladeflächen- und Fahrzeughöhe auswirkt.

Weiterhin ist in der US-PS 45 34 589 ein Leiterrahmen zur Abstützung und Befestigung von Bodenbelagsprofilen mit zwei parallelen Längsträgern und einer Vielzahl untereinander paralleler Querträger beschreiben. Dieser Leiterrahmen zeigt die Merkmale des Oberbegriffs des Anspruchs 1. Die Längsträger weisen auf Ihrer Oberseite Kerben auf, in die die Querträger, die als gerades U-Profil ausgebildet sind, von oben her eingesetzt sind. Zwar wird bei dieser Konstruktion eine durchgehende Auflagefläche auf den Längs- und Querträgern für die Bodenbelagsprofile erzielt, jedoch werden die Eigenschaften der Längsträgerprofile durch die Kerbwirkung der Einschnitte beeinträchtigt und bei den Längsträgerprofilen wird auf einen Obergurt verzichtet, da dadurch sowohl die Herstellung der Kerben als auch die Verschweißung zwischen Längs- und Querträgern erschwert werden würde. Somit ist diese Konstruktion nicht für Längsträgerprofile mit einem obenliegenden Gurt geeignet, der eine bessere Auflagefläche sowie bessere Trag- und Verformungseigenschaften bieten würde. Bei dieser bekannten Leiterrahmenkonstruktion wird ein besonders starrer und verwindungssteifer Rahmen realisiert, was, wie oben beschrieben, insbesondere bei Fahrzeugen mit langen Aufbauten oder bei Fahrzeugen für den Einsatz im Gelände zu Rißbildungen führen kann.

Die US-PS 27 00 551 beschreibt einen Fahrgestellrahmen für Lastkraftwagen, der aus zwei parallelen Längsträgern und einer Vielzahl paralleler Querträger aufgebaut ist, jedoch nicht der eingangs genannten Gattung von Leiterrahmen angehört, die als Hilfsrahmen zur Anbringung von Bodenbelagsprofilen auf einem Fahrgestellrahmen befestigt sind. Die Querträger weisen zum Teil Verformungen, wie z.B. Kröpfungen, auf und die Längsträger sind auf gerade Endabschnitte der Querträger aufgesteckt und mit diesen verschweißt. Dabei sind die Oberkanten der Querträger tiefer angeordnet als die Oberkanten der Längsträger. Diese bekannte Konstruktion zielt darauf ab, einen möglichst torsions- und verwindungssteifen Rahmen zu schaffen.

Aufgabe der vorliegenden Erfindung ist es, einen Leiterrahmen der eingangs genannten Gattung derart weiterzubilden, daß bei einfachem Aufbau und einfacher Montage eine flächenbündige Konstruktion mit erhöhter spezifischer Ladeflächenbelastung erzielt wird.

Diese Aufgabe wird erfindungsgemäß von einem Leiterrahmen mit den Merkmalen des Anspruchs 1 gelöst.

Durch die erfindungsgemäßen Merkmale ist erstmalig eine Leiterrahmenkonstruktion geschaffen, die einerseits die Vorteile der eingangs geschilderten bekannten Leiterrahmenkonstruktionen vereinigt und andererseits deren Nachteile vermeidet. So sind Leiterrahmenkonstruktionen der erfindungsgemäßen Art relativ verwindungsweich, wodurch Rißbildungsprobleme nicht auftreten. Aufgrund der Verformung der Querträger liegen die Auflageflächen der Querträger in der Ebene der Auflageflächen der Längsträger, so daß sowohl die Quer- als auch die Längsträger zur Abstützung und Befestigung der Bodenbelagsprofile herangezogen werden können, ohne daß hierzu aufwendige Ausgleichskonstruktionen erforderlich sind. Auch werden bei der Montage keine aufwendigen Vorrichtungen benötigt, daß die Lage der Querträger an den Längsträgern durch die in den Längsträgern angeordneten Durchbrechungen präzise festliegt. Einmessungsfehler bei der Montage können somit nicht auftreten.

Aufgrund der in einer Ebene liegenden Auflageflächen aller Träger ergibt sich eine absolut flächenbündige Konstruktion mit hoher spezifischer Belastbarkeit der Bodenbelagsprofile, wodurch auch eine Beladung mit schwerem Gerät, wie beispielsweise Gabelstaplern, möglich ist. Ferner sind Aussteifungs- oder Knotenbleche zur Verbindung der Querträger an den Längsträgern nicht erforderlich. Auch der Schweißaufwand für die Verbindung der Quer- mit den Längsträgern ist vergleichsweise gering, wie bei Leiterrahmenkonstruktionen der gattungsgemäßen Art.

Wie eingangs bereits erwähnt, werden bei Leiterrahmenkonstruktionen der gattungsgemäßen Art zur Montage die Querträger durch die Durchbrechungen in den Längsträgern eingeschoben, bis diese ihre endgültige Lage erreicht haben. In der Fachwelt war man bisher der Meinung, daß sich diese Art der Montage nur dann realisieren läßt, wenn die Querträger durchgehend gerade ausgebildet sind. Das Verdienst des Erfinders ist insbesondere darin zu sehen, erkannt zu haben, daß auch verformte Querträger durch die Durchbrechungen in den Längsträgern eingeschoben werden können, sofern eine Abstimmung der Verformung der Querträger mit der Formgebung der Durchbrechungen in den Längsträgern erfolgt.

Die Verformung der Querträger kann in verschiedenster Weise gestaltet sein. So kann die Verformung der Querträger im Kreuzungsbereich beispielsweise als Auskröpfung ausgebildet sein. Eine derartige Auskröpfung wird vorzugsweise durch ein gegenüber der Längsachse des Querträgers seitlich versetztes Herausbiegen eines Querträgerabschnittes bestimmter Länge erreicht. Diese durch ein seitlich versetztes Herausbiegen eines Querträgerabschnittes gebildete Auskröpfung kann in verschiedenster Weise gestaltet sein. So ist es möglich, die Auskröpfung bogen- oder V-förmige zu gestalten. Besonders vorteilhaft ist es jedoch, die Auskröpfung trapezförmige zu gestalten. Dadurch wird einerseits ein problemloses Einschieben bei der Montage ermöglicht und zum anderen sichergestellt, daß eine möglichst große Auflagefläche der Querträger zur Abstützung der Bodenbelagsprofile zur Verfügung steht.

Eine besonders zweckmäßige trapezförmige Ausgestaltung wird dadurch erreicht, daß der versetzte Querträgerabschnitt zu den seitlich angrenzenden, meist geraden Abschnitten des Querträgers parallel ausgerichtet ist und beidseitig in einem stumpfen Winkel anschließende Übergangsabschnitte aufweist, die in die seitich angrenzenden Abschnitte übergehen. Vorzugsweise ist die Anordnung derart getroffen, daß die Übergangsabschnitte in einem Winkel von etwa 150° zu dem parallel versetzten Querträgerabschnitt verlaufen.

Leiterrahmen werden aus Kostengründen aus handelsüblichen Profilen zusammengesetzt. Um in statischer Hinsicht optimale Verhältnisse und im Bereich der Oberseite der Profile möglichst große Auflageflächen zu erzielen, werden dabei sowohl für die Längsträger als auch für die Querträger liegende U-Profile, Z-, Doppel-T- oder C-Profile eingesetzt. Im Falle eines Einsatzes derartiger Profile ist es vorteilhaft, die Durchbrechungen in den Längsträgern jeweils der Profilform anzupassen und im Bereich des Steges zwischen dem Ober- und dem Untergurt der Profile anzuordnen.

Um das Einschieben derartiger Profile in die Durchbrechungen bei der Montage zu ermöglichen und die Durchbrechungen im Querschnitt möglichst klein bemessen zu können, ist es zweckmäßig, daß im Bereich der Auskröpfung der Obergurt und der Untergurt des jeweiligen Querträgers im wesentlichen parallel zueinander verlaufen.

Konstruktionsbedingt ist es häufig in der Praxis notwendig, daß die Längsträger eines Leiterrahmens nicht gerade durchlaufen, sondern gegenüber der Längsrichtung seitlich versetzte Abschnitte aufweisen. Derartige in Längsrichtung seitlich versetzt ausgebildete Längsträger können auch bei erfindungsgemäß ausgestalteten Leiterrahmen vorgesehen werden. Um in solchen Fällen nicht Querträger mit unterschiedlichen Auskröpfungen zur Verfügung stellen zu müssen, ist es vorteilhaft, die Länge der Auskröpfung jeweils dem Versatz des Längsträgers anzupassen.

Die Verbindung der Längsträger mit den Querträgern kann grundsätzlich in jeder beliebigen Weise erfolgen. Vorteilhaft ist es, die Verbindung als Schweißverbindung mit vertikal verlaufender Schweißnaht auszubilden. Um die eingangs geschilderte verwindungsweiche Konstruktion zu gewährleisten, ist es dabei zweckmäßig, die Querträger im Bereich der neutralen Zone mit den Längsträgern zu verbinden. Durch die Verbindung im Bereich der neutralen Zone ist insbesondere beim Einsatz von Schweißverbindungen Rißbildung praktisch ausgeschlossen.

Da bei üblichen Leiterrahmenkonstruktionen die Längsträger in aller Regel eine größere Profilhöhe haben als die Querträger, werden in der Praxis die Querträger eine Verformung in Form einer Auskröpfung aufweisen. In besonderen Sonderfällen kann es erfindungsgemäß jedoch auch möglich sein, anstelle der Querträger die Längsträger zu verformen bzw. mit einer Auskröpfung auszustatten.

Im folgenden ist zur weiteren Erläuterung und zum besseren Verständnis ein Ausführungsbeispiel der Erfindung unter Bezugnahme auf die beigefügten Zeichnungen näher beschrieben und erläutert.
- Fig. 1: zeigt schematisch in einer Draufsicht eine Gesamtansicht eines Leiterrahmens der erfindungsgemäßen Art,
- Fig. 2: zeigt einen Kreuzungsbereich zwischen einem Quer- und einem Längsträger des in Fig. 1 dargestellten Leiterrahmens in einer perspektivischen Ansicht in vergrößertem Maßstab,
- Fig. 3: zeigt den Kreuzungsbereich gemäß Fig. 2 mit aufgesetztem Bodenbelagsprofil in einem Vertikalschnitt, und
- Fig. 4: zeigt in verkleinertem Maßstab eine Gesamtansicht eines aus einem liegenden U-Profil gebildeten Querträgers des Leiterrahmens gemäß Fig. 1.

Bei dem in den Figuren dargestellten Ausführungsbeispiel besteht der Leiterrahmen 10 aus zwei Längsträgern 14 und einer Anzahl von quer zu den Längsträgern 14 verlaufenden Querträgern 16.

Die Längsträger 14 bestehen jeweils aus einem geraden Abschnitt, in dem sie parallel zueinander laufen, einem an diesen geraden Abschnitt in einem stumpfen Winkel anschließenden abgewinkelten Abschnitt, in dem sie divergieren und einem an den abgewinkelten Abschnitt anschließenden weiteren geraden Abschnitt, in dem sie in einem größeren Abstand als im ersten geraden Abschnitt parallel zueinander laufen. Diese Längsträgerausgestaltung stellt eine von vielen Gestaltungsmöglichkeiten dar. Grundsätzlich ist hierfür stets die Formgebung des Längsträgers des Lkw-Fahrgestelles maßgebend.

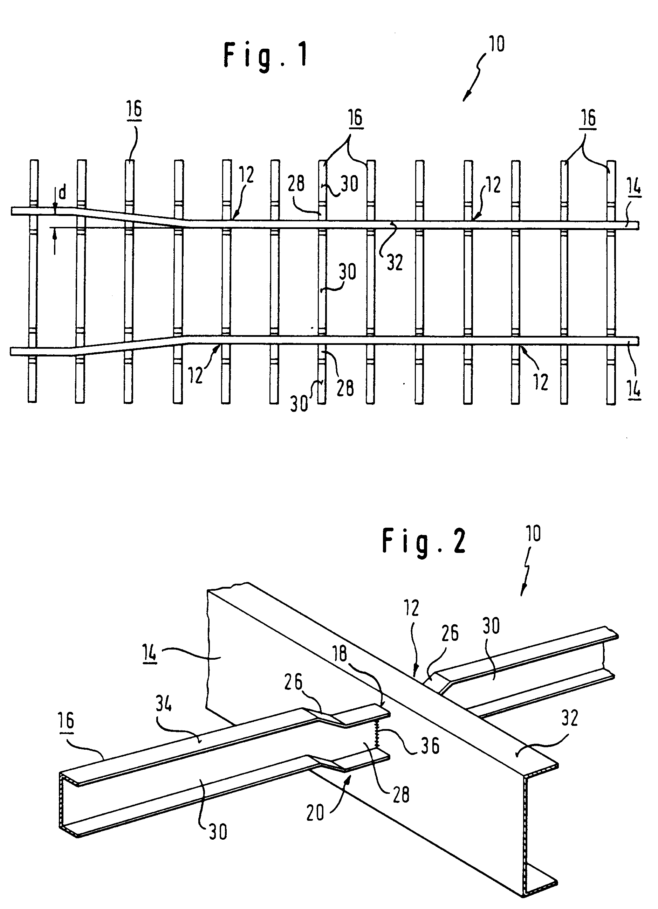

Aufgrund dieser (in Längsrichtung gesehen) seitlich versetzten Ausbildung ergibt sich an den Längsträgern ein Versatz, der in Querrichtung des Trägers betrachtet die Länge d aufweist (vgl. Fig. 1).

Die Querträger sind im vorliegenden Ausführungsbeispiel in etwa gleichen Abständen nebeneinander und jeweils parallel zueinander angeordnet. Sie sind mit den Längsträgern 14 jeweils im Kreuzungsbereich 12 miteinander verbunden, wie dies im folgenden noch beschrieben werden wird.

Ein kompletter Leiterrahmen weist selbstverständlich noch eine Vielzahl weiterer Elemente auf, die jedoch in der vorliegenden Fig. 1 der Übersichtlichkeit halber weggelassen sind.

Aus der in Fig. 2 dargestellten perspektivischen Teilansicht ist die Konstruktion des erfindungsgemäßen Leiterrahmens im Kreuzungsbereich 12 zwischen Längsträger 14 und Querträger 16 dargestellt. Im vorliegenden Ausführungsbeispiel werden der Längsträger 14 und der Querträger 16 von einem handelsüblichen, liegend angeordneten U-Profil gebildet.

Aufgrund der liegenden Anordnung bildet jeweils der oben liegende Schenkel des U-Profils den Obergurt und der unten liegende Schenkel den Untergurt der Konstruktion. Der zwischen den Schenkeln verlaufende Steg hat im Falle des Längsträgers 14 eine größere Höhe als im Falle des Querträgers 16.

Der Längsträger 14 ist im Kreuzungsbereich 12 mit einer Durchbrechung 18 ausgestattet. Diese Durchbrechung 18 entspricht im Querschnitt etwa dem Querschnitt des Querträgers 16. Sie ist im vorliegenden Ausführungsbeispiel ausschließlich im Steg des Längsträgers etwas unterhalb des Obergurtes angeordnet.

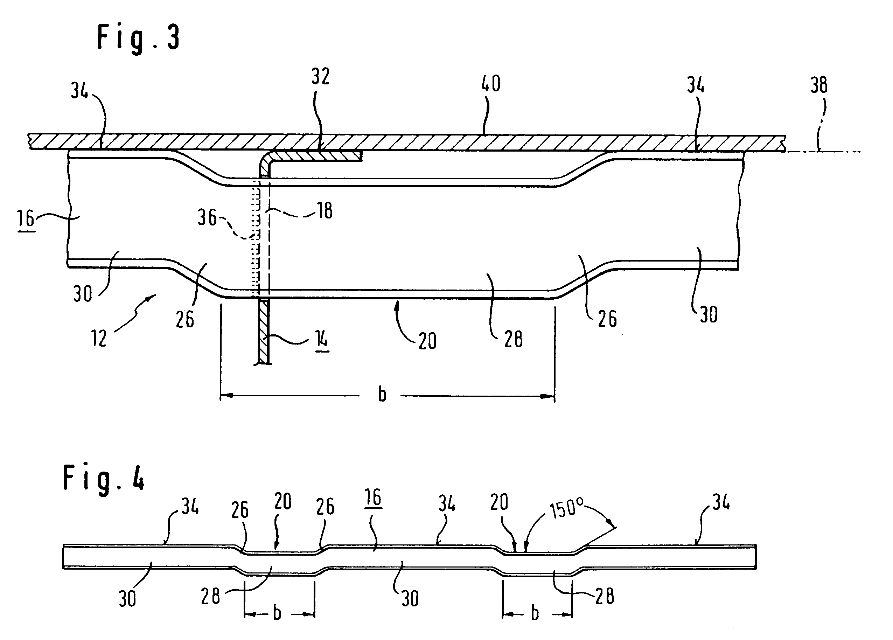

Die Oberseite des Obergurtes bildet sowohl beim Längsträger 14 als auch beim Querträger 16 jeweils eine Auflagefläche 32 bzw. 34 für ein Bodenbelagsprofil 40, wie dies in Fig. 3 dargestellt ist. Das Bodenbelagsprofil 40 ist in dieser Ausführungsform als Platte ausgebildet.

Wie aus den Fig. 2 und 3 hervorgeht, ist jeder Querträger 16 im Kreuzungsbereich 12 derarti verformt, daß die Auflagefläche 34 des Querträgers 16 in einer gemeinsamen Ebene 38 (vgl. Fig. 3) mit der Auflagefläche 32 des Längsträgers 14 liegt. Diese Verformung ist bei dem in den Fig. 2 und 3 dargestellten Ausführungsbeispiel als trapezförmige Auskröpfung 20 gestaltet. Diese trapezförmige Auskröpfung 20 besitzt einen versetzten Querträgerabschnitt 28, der zu den seitlich angrenzenden Abschnitten 30 des Querträgers parallel verläuft. Beidseitig an den versetzten Querträgerabschnitt 28 schließen sich in einem stumpfen Winkel Übergangsabschnitte 26 an, die in die seitlich angrenzenden Abschnitte 30 übergehen. Eine derartige trapezförmige Auskröpfung läßt sich in einer einfachen Biegevorrichtung relativ unkompliziert herstellen.

Die Verformung des Querträgers 16 nach Art einer Auskröpfung 20 ist erfindungsgemäß auf den Querschnitt der Durchbrechung 18 im Querträger 14 derart abgestimmt, daß sich der Querträger 16 durch die Durchbrechung 18 hindurch in die in den Fig. 2 und 3 dargestellte endgültige Lage einschieben läßt. In dieser endgültigen Lage liegt die Auflagefläche 32 des Längsträgers 14 und die Auflagefläche 34 des Querträgers 16 in der Auflageebene 38 für die Bodenbelagsprofile 40.

Die Verbindung der Querträger 16 mit den Längsträgern 14 erfolgt im vorliegenden Ausführungsbeispiel mittels einer vertikal verlaufenden Schweißnaht 36, wie dies in den Fig. 2 und 3 dargestellt ist.

Bei Leiterrahmen 10 mit zwei Längsträgern 14, wie sie in Fig. 1 dargestellt sind, besitzt jeder Querträger 16 zwei Auskröpfungen 20, wie dies in Fig. 4 dargestellt ist. Die Länge b des versetzten Abschnittes 28 der Auskröpfung 20 ist dabei etwas größer gewählt als die Länge d des Versatzes jedes Längsträgers 14 (vgl. Fig. 1). Damit wird erreicht, daß alle Querträger 16 des erfindungsgemäßen Leiterrahmens gleich ausgebildet sein können und sich sowohl im ersten geraden Abschnitt, als auch im divergierenden abgewinkelten Abschnitt und im weiteren geraden Abschnitt der Längsträger 14 anordnen lassen.

Zur Montage des erfindungsgemäßen Leiterrahmens 10 ist es lediglich erforderlich, die beiden Längsträger in einer Montagevorrichtung im vorgegebenen Abstand und in der vorgegebenen Ausrichtung nebeneinander anzuordnen. Im Anschluß daran müssen lediglich die Querträger 16 durch die Durchbrechungen 18 hindurch in ihre endgültige Lage eingeschoben werden. Aufgrund der absolut gleichen Ausgestaltung der Querträger 16 sind Verwechslungen oder Falschanordnungen nicht möglich. Auch können hinsichtlich des Abstandes der Querträger und der Lage gegenüber den Längsträgern keine Fehler unterlaufen, da diese Parameter durch die im Längsträger vorgesehenen Durchbrechungen 18 exakt vorgegeben sind. Es ist lediglich erforderlich, Mittel vorzusehen, die verhindern, daß die Querträger 16 zu weit oder zu wenig weit eingeschoben werden. Dies kann beispielsweise durch einfache Anschläge im Bereich der Querträgerenden erfolgen.

## Patentansprüche

1. Leiterrahmen (10) zur Abstützung und Befestigung von Bodenbelagsprofilen (40) von Aufbauten oder Plattformen von Lastkraftwagen oder Anhängern
- mit einem oder mehreren Längsträgern (14)
- einer Anzahl von Querträgern (16), die quer zu den Längsträgern verlaufen und mit diesen verbunden sind,
- mit allseitig geschlossenen Durchbrechungen (18) in den Längsträgern (14), durch die sich die Querträger (16) hindurcherstrecken,
- mit Auflageflächen (32) auf der Oberseite der Längsträger (14), auf denen die Bodenbelagsprofile (40) aufruhen
- sowie mit Auflageflächen (34) auf der Oberseite der Querträger (16),
dadurch **gekennzeichnet**, daß
- die Querträger (16) im Kreuzungsbereich (12) mit den Längsträgern (14) derart verformt sind, daß die Auflageflächen (34) der Querträger (16) in der Ebene (38) der Auflageflächen (32) der Längsträger (14) liegen,
- und daß die Verformung der Querträger (16) und die allseitig geschlossenen Durchbrechungen (18) im Längsträger (14) derart aufeinander abgestimmt sind, daß die Querträger (16) zusammen mit den verformten Abschnitten (20) durch die Durchbrechungen (18) hindurch in ihre endgültige Lage einschiebbar sind.

2. Leiterrahmen nach Anspruch 1, dadurch **gekennzeichnet,** daß die Längsträger (14) als liegendes U-Profil, Z-, Doppel-T- oder C-Profil ausgebildet sind und daß die Durchbrechungen (18) jeweils im Bereich des Steges zwischen dem Ober- und dem Untergurt angeordnet sind.

3. Leiterrahmen nach Anspruch 1 oder 2, dadurch **gekennzeichnet,** daß die Querträger (16) als liegendes U-Profil, Z-, Doppel-T- oder C-Profil ausgebildet sind.

4. Leiterrahmen nach Anspruch 1, dadurch **gekennzeichnet,** daß die Verformung der Querträger im Kreuzungsbereich (12) als Auskröpfung (20) ausgebildet ist.

5. Leiterrahmen nach Anspruch 4, dadurch **gekennzeichnet,** daß die Auskröpfung (20) von einem Querträgerabschnitt (28) gebildet wird, der gegenüber den seitlich angrenzenden Abschnitten (30) des Querträgers (16) versetzt angoerdnet ist und beidseitig Übergangsabschnitte (26) zum Anschluß an die seitlich angrenzenden Abschnitte (30) aufweist.

6. Leiterrahmen nach Anspruch 5, dadurch **gekennzeichnet,** daß die Auskröpfung bogenförmig gestaltet ist.

7. Leiterrahmen nach Anspruch 5, dadurch **gekennzeichnet,** daß die Auskröpfung V-förmig gestaltet ist.

8. Leiterrahmen nach Anspruch 5, dadurch **gekennzeichnet,** daß die Auskröpfung (20) trapezförmig gestaltet ist.

9. Leiterrahmen nach Anspruch 8, dadurch **gekennzeichnet,** daß der versetzte Querträgerabschnitt (28) zu den seitlich angrenzenden Abschnitten (30) des Querträgers (16) parallel verläuft und beidseitig in einem stumpfen Winkel anschließende Übergangsabschnitte (26) aufweist, die in die seitlich angrenzenden Abschnitte (30) übergehen.

10. Leiterrahmen nach Anspruch 9, dadurch **gekennzeichnet,** daß die Übergangsabschnitte (26) in einem Winkel von 150° zu dem parallel versetzten Abschnitt (28) verlaufen.

11. Leiterrahmen nach Anspruch 3 bis 5, dadurch **gekennzeichnet,** daß im Bereich der Auskröpfung (20) der Obergurt und der Untergurt des Querträgers (16) im wesentlichen parallel zueinander verlaufen.

12. Leiterrahmen nach einem der vorhergehenden Ansprüche, dadurch **gekennzeichnet,** daß der Querschnitt der Durchbrechungen (18) im Längsträger (14) im wesentlichen dem Querschnitt der Querträger (16) entspricht.

13. Leiterrahmen nach einem der vorhergehenden Ansprüche mit einem in Längsrichtung seitlich versetzt ausgebildeten Längsträger (14), dadurch **gekennzeichnet,** daß die Länge (b) der Auskröpfung (20) etwa der Länge (d) des Versatzes des Längsträgers (14) entspricht.

14. Leiterrahmen nach Anspruch 1, dadurch **gekennzeichnet,** daß die Längsträger (14) und die Querträger (16) im Kreuzungsbereich (12) nahe der neutralen Zone miteinander verbunden sind.

15. Leiterrahmen nach Anspruch 14, dadurch **gekennzeichnet,** daß die Verbindung als Schweißverbindung mit vertikal verlaufender Schweißnaht (36) ausgebildet ist.

## Claims

1. Ladder frame (10) for supporting and securing floor covering profiles (40) of superstructures or platforms of lorries or trailers, comprising:
- one or more longitudinal carriers (14),
- a number of transverse carriers (16) which extend transversly to the longitudinal carriers and are connected with these,
- through openings (18) closed on all sides in the longitudinal carriers (14) through which the transverse carriers (16) extend,
- support surfaces (32) on the upper side of the longitudinal carriers (14) upon which the floor covering profiles (40) rest,
- and support surfaces (34) on the upper side of the transverse carriers (16),
characterized in that
- the transverse carriers (16) in the intersecting region (12) with the longitudinal carriers (14) are deformed in such a manner that the support surfaces (34) of the transverse carriers (16) lie in the plane (38) of the support surfaces (32) of the longitudinal carriers (14),
- and the deformation of the transverse carriers (16) and the through openings (18) closed on all sides in the longitudinal carriers (14) are matched with one another in such a manner that the transverse carriers (16) together with the deformed sections (20) can be pushed through the through openings (18) into their final position.

2. Ladder frame according to claim 1, characterized in that the longitudinal carriers (14) are formed as lying U-profiles, Z-, double-T- or C-profiles and that the through openings (18) are arranged in the region of the web between the upper and lower flanges.

3. Ladder frame according to claim 1 or 2, characterized in that the transverse carriers (16) are formed as lying U-profiles, Z-, double-T- or C-profiles.

4. Ladder frame according to claim 1, characterized in that the deformation of the transverse carriers in the intersecting region (12) is formed as an offset bend.

5. Ladder frame according to claim 4, characterized in that the offset bend (20) is formed by a transverse carrier section (28) offset with respect to the laterally bordering sections (30) of the transverse carrier (16) and has on both sides transition sections (26) for connection with the laterally bordering sections (30).

6. Ladder frame according to claim 5, characterized in that the offset bend is arcuate.

7. Ladder frame according to claim 5, characterized in that the offset bend is V-shaped.

8. Ladder frame according to claim 5, characterized in that the offset bend (20) is trapezoidal.

9. Ladder frame according to claim 8, characterized in that the offset transverse carrier section (28) extends parallel to the laterally bordering sections (30) of the transverse carrier (16) and has on both sides transition sections (26) adjoining at an obtuse angle which pass over into the laterally bordering sections (30).

10. Ladder frame according to claim 9, characterized in that the transition sections (26) extend at an angle of 150° to the offset parallel section (28).

11. Ladder frame according to claims 3 to 5, characterized in that the upper and lower flanges of the transverse carrier (16) extend substantially parallel to one another in the region of the offset bend (20).

12. Ladder frame according to one of the preceding claims, characterized in that the cross-section of the through openings (18) in the longitudinal carrier (14) substantially correspond to the cross-section of the transverse carriers (16).

13. Ladder frame according to one of the preceding claims comprising a laterally offset longitudinal carrier (14) in the longitudinal direction, Characterized in that the length (b) of the offset bend (20) corresponds approximately to the length (d) of the offset of the longitudinal carrier (14).

14. Ladder frame according to claim 1, characterized in that the longitudinal carriers (14) and the transverse carriers (16) are connected with one another in the region of intersection (12) near the neutral zone.

15. Ladder frame according to claim 14, characterized in that the connection is formed as a weld joint with a vertically extending weld seam (36).

## Revendications

1. Châssis en échelle (10), pour soutenir et fixer des profilés de revêtement de plancher (40) venant de structures ou de plates-formes de camions ou de remorques,
- avec un ou plusieurs longerons (14)
- une pluralité de traverses (16), s'étendant transversalement par rapport aux longerons et leur étant reliées,
- avec des passages (18) fermés en pourtour, ménagés dans les longerons (14) et à travers lesquels s'étendent les traverses (16),
- avec des surfaces d'appui (32), réalisées en face supérieure des longerons (14) et sur lesquelles reposent les profilés de garniture de plancher (40),
- ainsi qu'avec des surfaces d'appui (34), réalisées en face supérieure des traverses (16),
caractérisé en ce que
- dans la zone de croisement (12) avec les longerons (14), les traverses (16) sont déformées de façon que les surfaces d'appui (34) des traverses (16) soient situées dans le plan (38) des surfaces d'appui (32) des longerons (14),
- et en ce que la déformation des traverses (16) et les passages (18), fermés en pourtour et ménagés dans le longeron (14), sont conçus, les uns pur rapport aux autres, de manière que les traverses (16) puissent être enfilées, conjointement avec les tronçons (20) déformés, à travers les passages (18), jusqu'à leur position finale.

2. Châssis en échelle selon la revendication 1, caractérisé en ce que les longerons (14) sont réalisés sous forme de profilé horizontal en U, en Z, en double T ou en C, et en ce que les passages (18) sont chacun disposés dans la zone de l'âme située entre la membrure supérieure et la membrure inférieure.

3. Châssis en échelle selon la revendication 1 ou 2, caractérisé en ce que les traverses (16) sont réalisées sous forme de profilé couché en U, en Z, en double T ou en C.

4. Châssis en échelle selon la revendication 1, caractérisé en ce que la déformation des traverses dans la zone de croisement (12) est réalisée sous la forme d'un dévoiement (20).

5. Châssis en échelle selon la revendication 4, caractérisé en ce que le dévoiement (20) est formé par un tronçon de traverse (28) décalé par rapport aux tronçons (30) limitrophes de la traverse (16) et présente des deux côtés des tronçons de transition (26), pour assurer le raccordement aux tronçons (30) limitrophes latéralement.

6. Châssis en échelle selon la revendication 5, caractérisé en ce que le dévoiement est arqué.

7. Châssis en échelle selon la revendication 5, caractérisé en ce que le dévoiement est en V.

8. Châssis en échelle selon la revendication 5, caractérisé en ce que le dévoiement (20) est trapézoïdal.

9. Châssis en échelle selon la revendication 8, caractérisé en ce que le tronçons de traverse (28) décalé s'étend parallèlement aux tronçons (30) limitrophes latéralement de la traverse (16) et présente des tronçons de transition (26), se raccordant des deux côtés selon un angle obtus et se transformant en les tronçons (30) limitrophes latéralement.

10. Châssis en échelle selon la revendication 9, caractérisé en ce que les tronçons de transition (26) s'étendent sous un angle de 150° par rapport au tronçon (28) décalé parallèlement.

11. Châssis en échelle selon les revendication, 3 à 5, caractérisé en ce que, dans la zone du dévoiement (20), la membrure supérieure et le membrure inférieure de la traverse (16) s'étendent sensiblement parallèlement.

12. Châssis en échelle selon l'une des revendications précédentes, caractérisé en ce que la section transversale des passages (18) ménagés dans les longerons (14) correspond sensiblement à celle des traverses (16).

13. Châssis en échelle selon l'une des revendications précédentes, avec un longeron (14) décalé latéralement dans la direction longitudinale, caractérisé en ce que la longueur (b) du dévoiement (20) correspond a peu près à la valeur (d) du décalage du longeron (14).

14. Châssis en échelle selon la revendication 1, caractérisé en ce que les longerons (14) et les traverses (16) sont reliés ensemble dans la zone de croisement (12), près de la zone neutre.

15. Châssis en échelle selon la revendication 14, caractérisé en ce que la liaison est réalisée sous forme de liaison soudée, avec un cordon de soudure (36) vertical.
